# EUROPÄISCHE PATENTANMELDUNG

(11) **EP 4 706 991 A1**
(43) Veröffentlichungstag der Anmeldung: **11.03.2026**
(21) Anmeldenummer: 25193702.5
(22) Anmeldetag: 04.08.2025
(51) Int. Cl.: B60C 11/03, B60C 19/00, B60C 9/20

(54) **ZU EINER PRODUKTLINIE GEHÖRENDE ERSTE UND ZWEITE FAHRZEUGREIFEN**

(30) Priorität: 09.09.2024 DE 102024208533
(71) Anmelder: Continental Reifen Deutschland GmbH, 30175 Hannover (DE)
(72) Erfinder: Rittweger, Stefan, 30175 Hannover (DE); Micuch, Michal, 020 01 Púchov (SK); Kotlas, Jan, 020 01 Púchov (SK)
(74) Vertreter: Continental Corporation

(57) **Zusammenfassung**

Zu einer Produktlinie gehörende erste und zweite Fahrzeugreifen, wobei die ersten Fahrzeugreifen erste Reifenbreiten und die zweiten Fahrzeugreifen zweite, gegenüber den ersten Reifenbreiten geringere Reifenbreiten aufweisen.

Die ersten Fahrzeugreifen weisen jeweils einen Laufstreifen auf, welcher zwei schulterseitige Profilrippen (1) mit Querrillen (6) und zwischen den schulterseitigen Profilrippen (1) zwei einander benachbarte Profilrippen (2, 3) mit gleichsteigend und jeweils parallel zueinander verlaufenden Querrillen (7, 7) und eine weitere Profilrippe (4) mit parallel verlaufenden Rillen (8) mit zu den Querrillen (7, 7') in den einander benachbarten Profilrippen (2, 3) gegensinniger Steigung aufweist.

Die zweiten Fahrzeugreifen weisen jeweils einen Laufstreifen auf, welcher schulterseitige Profilrippen (1') mit Querrillen (6) analog zu den Querrillen (6) der schulterseitige Profilrippen (1) des Laufstreifens der ersten Fahrzeugreifen, ggf. skaliert, und zwei mittlere Profilrippen (2', 3') mit analoger Strukturierung der beiden mit gleichsteigend verlaufenden Querrillen (7, 7') versehenen Profilrippen (2, 3) der Laufstreifen der ersten Fahrzeugreifen, jedoch horizontal gespiegelt und ggf. skaliert, umfasst.

## Beschreibung

Die Erfindung betrifft zu einer Produktlinie gehörende erste und zweite Fahrzeugreifen, wobei die ersten Fahrzeugreifen erste Reifenbreiten und die zweiten Fahrzeugreifen zweite, gegenüber den ersten Reifenbreiten geringere Reifenbreiten aufweisen, wobei die ersten und die zweiten Fahrzeugreifen jeweils einen mehrlagigen Gürtelverband mit Gürtellagen, deren Festigkeitsträger einander kreuzen, aufweisen

Die zu einer Produktlinie gehörenden Fahrzeugreifen für PKW oder SUVs umfassen meist eine Größenpalette, die bezüglich der Reifenbreiten von 145 mm bis 325 mm reichen kann. Es ist üblich, die innerhalb der vorgesehenen Größenpalette befindlichen breiteren Reifen insbesondere hinsichtlich jener Eigenschaften, die durch die Profilierung des Laufstreifen beeinflussbar sind, zu optimieren. Zu diesen Eigenschaften gehören ein geringes Abrollgeräusch, gute Aquaplaning-Eigenschaften und ein geringer, insbesondere gleichmäßiger Laufstreifenabrieb, gute Handlingeigenschaften und eine gute Nässeperformance.

Die Skalierung von Laufstreifenprofilierungen innerhalb einer Produktlinie stellt bei einer umfangreichen Größenpalette eine große Herausforderung dar. Würde man versuchen, eine Größenpalette von Reifen mit einer Breite von beispielsweise 145 mm bis zu Reifen mit einer Breite von beispielsweise 325 mm mit einem einzigen Profilmodul zu versehen, dann würden einzelne Profilelemente sehr groß oder sehr klein werden. Zu kleine Profilelemente, beispielsweise zu kleine Profilblöcke, verschlechtern beispielsweise die Trockenperformance, während zu große Profilblöcke die Aquaplaning-Eigenschaften und das Abrollgeräusch verschlechtern. Es ist bekannt, innerhalb einer Größenpalette die Anzahl der Profilrippen und/oder die Anzahl der Profilblöcke über den Reifenumfang zu variieren.

Es ist grundsätzlich bekannt, bei Skalierungen auf unterschiedliche Reifengrößen die Anzahl der Profilrippen und die Größen der Profilpositive bzw. Profilblöcke über den Reifenumfang zu variieren. Werden Profilrippen weggelassen, so können sich durch die Ausgestaltung und Ausrichtung von Querrillen in den verbleibenden Profilrippen die Profileigenschaften signifikant ändern, ein Schiefziehen und schlechter, ungleichmäßiger Abrieb können als Folgen auftreten.

Der Erfindung liegt daher die Aufgabe zugrunde, zu einer Produktlinie gehörende erste und zweite Fahrzeugreifen der eingangs genannten Art derart zu gestalteten, dass die größenangepassten, herunter skalierten zweiten Fahrzeugreifen weitgehend die Profileigenschaften bzw. Reifeneigenschaften der ersten Fahrzeugreifen aufweisen, insbesondere nicht zum Schiefziehen neigen und einen gleichmäßigen Abrieb aufweisen.

Diese Aufgabe wird erfindungsgemäß dadurch gelöst, dass die ersten Fahrzeugreifen
- jeweils einen Laufstreifen aufweisen, welcher zwei schulterseitige Profilrippen mit Querrillen und zwischen den schulterseitigen Profilrippen zwei einander benachbarte Profilrippen mit gleichsteigend und jeweils parallel zueinander verlaufenden Querrillen, welche unter einem Winkel von 15° bis 55°, insbesondere bis zu 35°, zur axialen Richtung verlaufen, und eine weitere Profilrippe mit parallel zueinander und unter einem Winkel von 40° bis 55° zur axialen Richtung verlaufenden Rillen mit zu den Querrillen in den einander benachbarten Profilrippen gegensinniger Steigung aufweist,
- wobei die Festigkeitsträger in der radial äußersten Gürtellage der ersten Fahrzeugreifen zu den Querrillen in den beiden einander benachbarten Profilrippen gleichsteigend orientiert sind,
wobei die zweiten Fahrzeugreifen
- jeweils einen Laufstreifen aufweisen, welcher schulterseitige Profilrippen mit Querrillen analog zu den Querrillen der schulterseitige Profilrippen des Laufstreifens der ersten Fahrzeugreifen, ggf. skaliert, und zwei mittlere Profilrippen mit analoger Strukturierung der beiden mit gleichsteigend verlaufenden Querrillen versehenen Profilrippen der Laufstreifen der ersten Fahrzeugreifen, jedoch horizontal gespiegelt und ggf. skaliert, umfasst,
- wobei die Festigkeitsträger in der radial äußerste Gürtellage zu den Querrillen in den zwei mittleren Profilrippen gegensinnig steigend orientiert sind.

Die ersten und zweiten Fahrzeugreifen sind derart aufeinander abgestimmt bzw. gestaltet, dass die grundsätzlichen Profilstrukturen der beiden, mit gleichsteigend verlaufenden Querrillen versehenen Profilrippen in den zweiten Fahrzeugreifen horizontal gespiegelt und ggf. skaliert vorhanden sind, wobei diese Profilrippen die einzigen zwischen den schulterseitigen Profilrippen verlaufenden Profilrippen sind. Die radial äußerste Gürtellage behält die Steigungsrichtung ihrer Festigkeitsträger bei, sodass in den zweiten Fahrzeugreifen ihre Steigung gegensinnig zur Steigung der Querrillen in den Profilrippen ist. Durch die erfindungsgemäßen Maßnahmen wird vor allem ein Schiefziehen der zweiten Fahrzeugreifen und ein unregelmäßiger Abrieb der Laufstreifen der zweiten Fahrzeugreifen vermieden.

Die gemäß der Erfindung gesetzten Maßnahmen, insbesondere die horizontale Spiegelung der beiden Profilrippen und die gegebenenfalls vorzunehmende Skalierung, sind besonders gut umsetzbar, wenn die ersten Fahrzeugreifen Reifenbreiten aufweisen, die um mindestens 20,00 mm größer sind als die Reifenbreiten der zweiten Fahrzeugreifen.

Die zur Produktlinie gehörenden ersten und zweiten Fahrzeugreifen sind bevorzugt Reifen für Personenkraftwagen, Vans (Transporter oder SUVs). Diesbezüglich ist es besonders vorteilhaft, wenn die ersten Reifen Reifenbreiten von bis zu 325,00 mm und insbesondere von ≥ 205,00 mm aufweisen und wenn die zweiten Fahrzeugreifen Reifenbreiten ab 145,00 mm und insbesondere bis zu 185,00 mm aufweisen.

Für eine gute Handlingperformance und Nässeperformance der ersten und zweiten Fahrzeugreifen ist es ferner besonders vorteilhaft, wenn die schulterseitigen Profilrippen in den Laufstreifen der ersten und der zweiten Fahrzeugreifen Querrillen aufweisen, die sich in axialer Richtung oder zur axialen Richtung unter einem Winkel von bis zu 10° erstrecken, wobei diese Winkel in den schulterseitigen Profilrippen der Laufstreifen der ersten und zweiten Fahrzeugreifen vorzugweise gleich groß oder im Wesentlichen gleich groß sind.

Eine diesbezüglich ebenfalls vorteilhafte Ausgestaltung der ersten und zweiten Fahrzeugreifen besteht darin, dass die Querrillen in den zwei einander benachbarten Profilrippen in den Laufstreifen der ersten Fahrzeugreifen und die Querrillen in den mittleren Profilrippen der Laufstreifen der zweiten Fahrzeugreifen jeweils unter gleich großen Winkeln zur axialen Richtung verlaufen.

Weitere Merkmale, Vorteile und Einzelheiten der Erfindung werden nun anhand der Zeichnung, die ein Ausführungsbeispiel darstellt, näher beschrieben. Dabei zeigen
Fig. 1 einen Umfangsabschnitt eines Laufstreifens eines ersten Fahrzeugreifens mit fünf in Umfangsrichtung umlaufenden Profilrippen und
Fig. 2 einen Umfangsabschnitt eines skalierten (größenveränderten) Laufstreifens eines zweiten Fahrzeugreifens mit vier in Umfangsrichtung umlaufenden Profilrippen.

Die Erfindung befasst sich mit Fahrzeugreifen einer Produktlinie, um über eine bestimmte Größenpalette Reifen mit weitgehend übereinstimmenden Reifen- bzw. Laufstreifeneigenschaften zu erhalten. Die Fahrzeugreifen sind vorzugsweise Fahrzeugluftreifen und besonders bevorzugt Fahrzeugluftreifen in Radialbauart, für Personenkraftwagen, Vans (Transporter) oder SUVs.

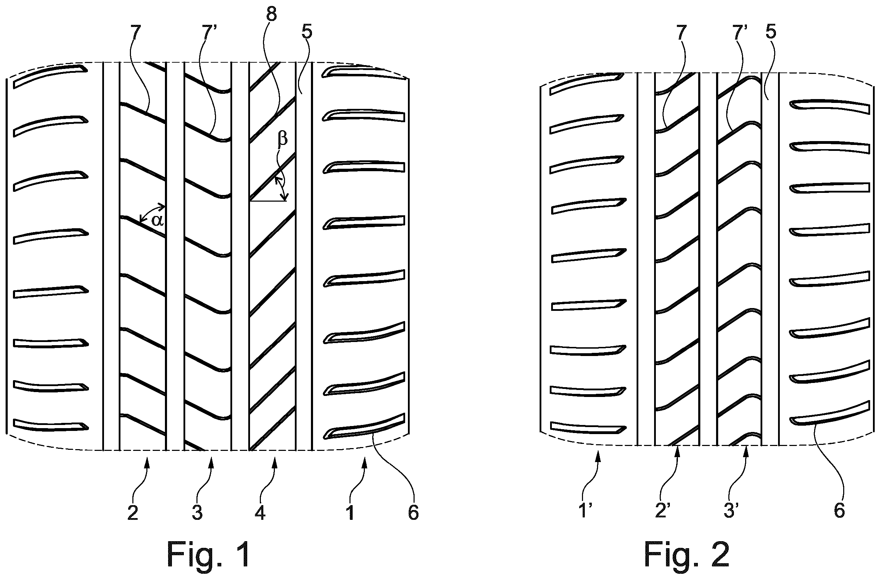

Fig. 1 zeigt einen Umfangsabschnitt eines Laufstreifens eines erstens Fahrzeugreifens, welcher einen Bereich der Größenpalette einer Produktlinie abdeckt, insbesondere Fahrzeugreifen mit einer Reifenbreite von ≥ 205 mm, vorzugsweise bis zu 325 mm. Der in Fig. 1 gezeigte Laufstreifen umfasst fünf in Umfangsrichtung des Laufstreifens umlaufende Profilrippen, zwei schulterseitige Profilrippen 1, je eine halbmittige Profilrippe 2, 4 in jeder Laufstreifenhälfte und eine zentrale, mittig verlaufende Profilrippe 3.

Sämtliche Profilrippen 1, 2, 3 und 4 sind voneinander durch in Umfangsrichtung und beim gezeigten Ausführungsbeispiel gerade verlaufende Umfangsrillen 5 getrennt. Die Umfangsrillen 5 weisen die für den jeweiligen Fahrzeugreifen vorgesehene größte Profiltiefe und eine für Umfangsrillen übliche Breite von 5,00 mm bis 7,00 mm auf. Die beiden schulterseitige Profilrippen 1 weisen übereinstimmende Breiten auf und sind breiter als die zentrale Profilrippe 3 und die beiden halbmittigen Profilrippen 2, 4, wobei die Rippen 2, 3 und 4 ebenfalls übereinstimmend breit ausgeführt sind.

In den schulterseitigen Profilrippen 1 sind parallel zueinander verlaufende Querrillen 6 ausgebildet, welche sich in axialer Richtung oder unter einem von der axialen Richtung geringfügig, insbesondere bis zu 10°, abweichenden Winkel erstrecken. Die Querrillen 6 enden bei der dargestellten Ausführungsvariante in einem geringen Abstand von einigen wenigen Millimetern vor der jeweiligen Umfangsrille 5. Bei einer alternativen Ausführung der schulterseitigen Profilrippen 1 sind Einschnitte vorgesehen, welche die laufstreifeninnenseitigen Enden der Querrillen 6 mit der benachbarten Umfangsrille 5 verbinden. Bei einer weiteren alternativen Ausführung münden die Querrillen 6 selbst in die jeweilige Umfangsrille 5 ein.

Die in Fig. 1 linke halbmittige Profilrippe 2 sowie die zentrale Profilrippe 3 sind jeweils von Querrillen 7, 7' durchquert, welche innerhalb der Profilrippen 2 und 3 jeweils parallel zueinander verlaufen und sich zur axialen Richtung unter einem spitzen Winkel α von 15° bis 55°, insbesondere bis 35°, erstrecken, wobei der Winkel α in beiden Profilrippen 2 und 3 vorzugsweise gleich groß ist und die Orientierung der Querrillen 7, 7' gegenüber der axialen Richtung in beiden Profilrippen 2, 3 übereinstimmt. Beim gezeigten Ausführungsbeispiel verlaufen die Querrillen 7, 7', abgesehen von kurzen gebogenen Endabschnitten, mit welchen sie jeweils in die weiter laufstreifenaußenseitige Umfangsrille 5 einmünden, gerade. Die Strukturierung der halbmittigen Profilrippe 2 und der zentralen Profilrippe 3 mit Querrillen 7, 7' ist daher übereinstimmend oder weitgehend übereinstimmend. Zusätzlich können in der halbmittigen Profilrippe 2 und der zentralen Profilrippe 3 auf nicht gezeigte Weise Einschnitte ausgebildet sein, die eine Breite im Bereich von 0,40 mm bis 1,00 mm aufweisen. Die Querrillen 7, 7 in der halbmittige Profilrippe 2 und die zentrale Profilrippe 3 verlaufen gleichermaßen steigend bzw. gleichermaßen fallend, beim gezeigten Ausführungsbeispiel gleichermaßen rechts fallend und sämtlich parallel zueinander.

Die in Fig. 1 rechte halbmittige Profilrippe 4 weist eine Strukturierung mit über einen Großteil ihrer jeweiligen Erstreckung oder insgesamt gerade und zueinander parallel verlaufenden Rillen 8 auf. Die Rillen 8 durchqueren die halbmittige Profilrippe 4 unter einem Winkel β von 40° bis 55° relativ zur axialen Richtung und bezüglich der axialen Richtung gegensinnig zu den Querrillen 7, 7' geneigt und daher bei der gezeigten Ausführung rechtssteigend. Zusätzlich kann die halbmittige Profilrippe 4 mit Einschnitten versehen sein.

Die Querrillen 7, 7' und die Rillen 8 weisen an der Laufstreifenperipherie eine Breite auf, die 2,00 mm bis 5,00 mm beträgt und insbesondere jeweils konstant ist. Bei alternativen Ausführungen münden die Querrillen 7, 7' und/oder die Rillen 8 nur in eine der Umfangsrillen 5 und enden daher innerhalb der Profilrippen 2, 3 und/oder 4.

Zu größeren Reifenbreiten und Dimensionen hin werden die blockartigen Strukturen innerhalb der Profilrippen 1, 2, 3 und 4 und die Breiten der Profilrippen insbesondere weitgehend proportional größenangepasst, also "hoch" skaliert.

Fig. 2 zeigt einen Umfangsabschnitt eines Laufstreifens, welcher einen weiteren Bereich der Größenpalette der Produktlinie abdeckt, nämlich Fahrzeugreifen mit einer Reifenbreite von insbesondere 145 mm bis zu ≤ 195 mm. Der Laufstreifen umfasst analoge Strukturen des in Fig. 1 gezeigten Laufstreifens, nämlich zwei schulterseitige Profilrippen 1' mit Querrillen 6 mit gleicher oder weitgehend gleicher Orientierung wie in Fig. 1, ferner Profilrippen 2' und 3', strukturell analog zu den Profilrippen 2 und 3 der Fig. 1, jedoch horizontal gespiegelt und ggf. gleichzeitig skaliert zur Anpassung an geringe Reifenbreiten bzw. kleinere Reifendimensionen. Die in Fig. 1 vorhandene halbmittige Profilrippe 4 ist in Fig. 2 weggelassen worden. Bei Fahrzeugreifen mit Laufstreifen gemäß Fig. 2 werden zu kleineren Reifenbreiten und Dimensionen hin die blockartigen Strukturen innerhalb der Profilrippen 1, 2' und 3' und die Breiten der Profilrippen 1, 2' und 3' insbesondere und weitgehend proportional größenangepasst, also "herunter" skaliert.

Der Laufstreifen gemäß Fig. 2 weist daher zwei Schulterblockreihen 1' mit Querrillen 5, zwei zwischen diesen verlaufende mittlere Profilrippen 2' und 3' und drei in Umfangsrichtung umlaufende Umfangsrillen 5 auf. Die Querrillen 7, 7' in den mittleren Profilrippen 2' und 3' verlaufen infolge der horizontalen Spiegelung rechtssteigend.

Die Fahrzeugreifen mit den Laufstreifen gemäß Fig. 1 und Fig. 2 weisen, wie es üblich ist, einen Gürtelverband mit zumindest zwei Gürtellagen, welche mit Festigkeitsträgern, insbesondere mit Stahlkorden, verstärkt sind, auf. Die Gürtellagen weisen als Festigkeitsträger insbesondere Stahlkorde auf, die sich kreuzen, das heißt, die in der einen Gürtellage verlaufenden Stahlkorde kreuzen die in der anderen Gürtellage vorhandenen Stahlkorde, der diesbezügliche Winkel beträgt beispielsweise 20° bis 25° relativ zur Umfangsrichtung. In Fahrzeugreifen mit einem Laustreifen gemäß Fig. 1 verlaufen die Stahlkorde in der äußersten Gürtellage analog zu den Rillen 8 rechtssteigend. In Fahrzeugreifen mit einem Laustreifen gemäß Fig. 2 verlaufen die Festigkeitsträger bzw. Stahlkorde in der radial äußersten Gürtellage wie in Fig. 1, daher in Fig. 2 gegensinnig steigend zu den Querrillen 7, 7' in den Profilrippen 2' und 3', im gezeigten Ausführungsbeispiel daher rechts fallend.

### Bezugszeichenliste

- 1, 1': schulterseitige Profilrippe
- 2, 4: halbmittige Profilrippe
- 3: zentrale Profilrippe
- 2', 3': Profilrippen
- 4: Querrille
- 5: Umfangsrille
- 6: Querrille
- 7, 7': Querrille
- 8: Rille

## Patentansprüche

1. Zu einer Produktlinie gehörende erste und zweite Fahrzeugreifen, wobei die ersten Fahrzeugreifen erste Reifenbreiten und die zweiten Fahrzeugreifen zweite, gegenüber den ersten Reifenbreiten geringere Reifenbreiten aufweisen, wobei die ersten und die zweiten Fahrzeugreifen jeweils einen mehrlagigen Gürtelverband mit Gürtellagen, deren Festigkeitsträger einander kreuzen, aufweisen,
**dadurch gekennzeichnet,**
**dass** die ersten Fahrzeugreifen
- jeweils einen Laufstreifen aufweisen, welcher zwei schulterseitige Profilrippen (1) mit Querrillen (6) und zwischen den schulterseitigen Profilrippen (1) zwei einander benachbarte Profilrippen (2, 3) mit gleichsteigend und jeweils parallel zueinander verlaufenden Querrillen (7, 7'), welche unter einem Winkel von 15° bis 55°, insbesondere bis 35°, zur axialen Richtung verlaufen, und eine weitere Profilrippe (4) mit parallel zueinander und unter einem Winkel von 40° bis 55° zur axialen Richtung verlaufenden Rillen (8) mit zu den Querrillen (7, 7') in den einander benachbarten Profilrippen (2, 3) gegensinniger Steigung aufweist,
- wobei die Festigkeitsträger in der radial äußersten Gürtellage der ersten Fahrzeugreifen zu den Querrillen (7, 7') in den beiden einander benachbarten Profilrippen (2, 3) gleichsteigend orientiert sind,
wobei die zweiten Fahrzeugreifen
- jeweils einen Laufstreifen aufweisen, welcher schulterseitige Profilrippen (1') mit Querrillen (6) analog zu den Querrillen (6) der schulterseitige Profilrippen (1) des Laufstreifens der ersten Fahrzeugreifen, ggf. skaliert, und zwei mittlere Profilrippen (2', 3') mit analoger Strukturierung der beiden mit gleichsteigend verlaufenden Querrillen (7, 7') versehenen Profilrippen (2, 3) der Laufstreifen der ersten Fahrzeugreifen, jedoch horizontal gespiegelt und ggf. skaliert, umfasst,
- wobei die Festigkeitsträger in der radial äußerste Gürtellage zu den Querrillen (7, 7') in den zwei mittleren Profilrippen (2', 3') gegensinnig steigend orientiert sind.

2. Zu einer Produktlinie gehörende erste und zweite Fahrzeugreifen nach Anspruch 1, **dadurch gekennzeichnet, dass** die ersten Fahrzeugreifen Reifenbreiten aufweisen, die um mindestens 20 mm größer sind als die Reifenbreiten der zweiten Fahrzeugreifen.

3. Zu einer Produktlinie gehörende erste Fahrzeugreifen nach Anspruch 1 oder 2, **dadurch gekennzeichnet, dass** sie Reifenbreiten von bis zu 325 mm und insbesondere von ≥ 205 mm aufweisen.

4. Zu einer Produktlinie gehörende zweite Fahrzeugreifen nach einem der Ansprüche 1 bis 3, **dadurch gekennzeichnet, dass** sie Reifenbreiten ab 145 mm und insbesondere bis zu 185 mm aufweisen.

5. Zu einer Produktlinie gehörende erste und zweite Fahrzeugreifen nach einem der Ansprüche 1 bis 4, **dadurch gekennzeichnet, dass** die schulterseitigen Profilrippen (1, 1') in den Laufstreifen der ersten und der zweiten Fahrzeugreifen Querrillen (6) aufweisen, die sich in axialer Richtung oder zur axialen Richtung unter einem Winkel von bis zu 10° erstrecken, wobei diese Winkel in den schulterseitigen Profilrippen (1, 1') der Laufstreifen der ersten und zweiten Fahrzeugreifen vorzugsweise gleich groß sind.

6. Zu einer Produktlinie gehörende erste und zweite Fahrzeugreifen nach einem der Ansprüche 1 bis 5, **dadurch gekennzeichnet, dass** die Querrillen (7, 7') in den zwei einander benachbarte Profilrippen (2, 3) in den Laufstreifen der ersten Fahrzeugreifen und die Querrillen (7, 7') in den mittleren Profilrippen (2', 3') der Laufstreifen der zweiten Fahrzeugreifen jeweils unter gleich großen Winkeln (α) zur axialen Richtung verlaufen.
